# EUROPÄISCHE PATENTSCHRIFT

(11) **EP 4 077 982 B1**
(45) Veröffentlichungstag und Bekanntmachung des Hinweises auf die Patenterteilung: **24.04.2024**
(21) Anmeldenummer: 20824195.0
(22) Anmeldetag: 09.12.2020
(51) Int. Cl.: F16H 63/34

(54) **PARKSPERRENSYSTEM FÜR EIN KRAFTFAHRZEUG**
PARKING LOCK SYSTEM FOR A MOTOR VEHICLE
SYSTÈME DE VERROUILLAGE DE STATIONNEMENT POUR VÉHICULE AUTOMOBILE

(30) Priorität: 18.12.2019 DE 102019008811
(43) Veröffentlichungstag der Anmeldung: 26.10.2022
(73) Patentinhaber: Mercedes-Benz Group AG, 70372 Stuttgart (DE)
(72) Erfinder: HASENKAMP, Jan, 71573 Allmersbach im Tal (DE)
(74) Vertreter: Novagraaf Group
(86) Internationale Anmeldenummer: PCT/EP2020/085314
(87) Internationale Veröffentlichungsnummer: WO 2021/122233

(56) Entgegenhaltungen:
- WO-A1-2017/211386
- CN-U- 204 358 083
- DE-A1-102004 037 982
- DE-A1-102010 061 171

## Beschreibung

Die Erfindung betrifft ein Parksperrensystem für ein Kraftfahrzeug.

Aus der DE 10 2011 086 238 A1, der DE 10 2018 130 315 A1, der DE 10 2018 003 751 A1 sowie der DE 10 2015 014 937 A1 sind bereits Parksperrensysteme für Kraftfahrzeuge bekannt, bei welchen an einem separat von einem Getriebegehäuse ausgebildeten Parksperrengehäuse sowohl eine Sperrklinke als auch eine für eine Betätigung der Sperrklinke vorgesehene Schaltstange gelagert sind.

Außerdem sind aus der WO 2017/211386 A1, der DE 10 2004 037982 A1 und der DE 10 2010 061171 A1 Parksperrensysteme bekannt, bei denen außerdem ein Parksperrengehäuse eine Platte aufweist, wobei ein ebener Bereich der Platte senkrecht zu der Betätigungsrichtung angeordnet ist und wobei in der Platte ein Sperrklinkenbolzen zur Lagerung der Sperrklinke gelagert ist.

Der Erfindung liegt die Aufgabe zugrunde, ein kostengünstiges, kompaktes, leicht montierbares und betriebssicheres Parksperrensystem bereitzustellen. Sie wird durch ein erfindungsgemäßes Parksperrensystem entsprechend dem Anspruch 1 sowie durch ein Getriebe gemäß Anspruch 8 gelöst. Weiterbildungen der Erfindung ergeben sich aus den abhängigen Ansprüchen.

Die Erfindung geht aus von einem Parksperrensystem für ein Kraftfahrzeug, mit einem an einem Getriebegehäuse montierbaren Parksperrengehäuse, mit einer an dem Parksperrengehäuse drehbar um eine Drehachse gelagerten Sperrklinke, einer an dem Parksperrengehäuse in einer Betätigungsrichtung verschiebbar gelagerten Schaltstange, mit einem an der Schaltstange gelagerten Betätigungselement und mit einer hydraulischen Kolbenzylindereinheit.

Es wird weiter davon ausgegangen, dass das Parksperrengehäuse eine Zylinderbohrung der hydraulischen Kolbenzylindereinheit aufweist, wobei die Zylinderbohrung koaxial zu der Schaltstange angeordnet ist, wobei die Drehachse der Sperrklinke parallel zu der Betätigungsrichtung angeordnet ist.

Es wird ferner davon ausgegangen, dass das Parksperrengehäuse eine zumindest bereichsweise ebene Platte aufweist, wobei ein ebener Bereich der Platte senkrecht zu der Betätigungsrichtung angeordnet ist und wobei in der Platte ein Sperrklinkenbolzen zur Lagerung der Sperrklinke gelagert ist.

Ferner wird davon ausgegangen, dass in der Betätigungsrichtung gesehen die Sperrklinke hinter der Platte angeordnet ist.

Die Platte kann mehrere Funktionen erfüllen. Zum einen kann die Platte vorteilhaft zur Befestigung des Parksperrengehäuses an einem Getriebegehäuse verwendet werden, zum anderen kann an der Platte die Sperrklinke auf einfache Weise gelagert werden.

Erfindungsgemäß ist eine hydraulischen Kolbenzylindereinheit (38) zur Verschiebung der Schaltstange in der Beätigungsrichtung vorgesehen,
wobei das Parksperrengehäuse ein als einteilig und als Gussteil mit der Platte ausgeführtes Betätigungsgehäuse aufweist, wobei das Betätigungsgehäuse eine Zylinderbohrung der hydraulischen Kolbenzylindereinheit aufweist, die koaxial zu der Schaltstange angeordnet ist, wobei innerhalb der Zylinderbohrung ein Kolben der Kolbenzylindereinheit angeordnet ist, wobei ein hinsichtlich der Betätigungsrichtung im Bereich der hydraulischen Kolbenzylindereinheit angeordneter Rastenhebel vorgesehen ist, der verschwenkbar an dem Betätigungsgehäuse gelagert ist, wobei eine Schwenkebene des Rastenhebels senkrecht zu der Drehachse angeordnet ist.

Durch die Erfindung wird ein kompaktes, kostengünstiges und einfach zu montierendes Parksperrensystem dargestellt, bei welchem viele Teile an einem separat von dem Getriebegehäuse ausgebildeten Parksperrengehäuse gelagert sind. Außerdem ist auf diese Weise der Rastenhebel platzsparend und günstig für die Funktion an dem Parksperrengehäuse angeordnet.

Vorteilhaft dient der Rastenhebel zu einer Fixierung eines Kolbens der Kolbenzylindereinheit in einer bestimmten Stellung entlang der Betätigungsrichtung. Vorteilhaft weist hierzu der Kolben eine Ausnehmung auf, in die der Rastenhebel zu der Fixierung eingreifen kann.

Vorteilhaft ist der Rastenhebel als ein im Wesentlichen ebenes Blechteil ausgeführt, das parallel zu der Platte angeordnet ist.

Die hydraulische Kolbenzylindereinheit wirkt dabei vorteilhaft in der Betätigungsrichtung. Der Kolben der Kolbenzylindereinheit ist dabei vorteilhaft mit der Schaltstange wirkverbunden.

Besonders vorteilhaft ist dabei ein Zylinder der hydraulischen Kolbenzylindereinheit einteilig mit dem Parksperrengehäuse ausgebildet.

Unter einem "Parksperrensystem" soll ein System verstanden werden, das dazu vorgesehen ist, ein Kraftfahrzeuggetriebe, insbesondere ein Automatikgetriebe, in einem eingelegten Zustand zu verriegeln, sodass wenigstens eine Ausgangswelle des Kraftfahrzeuggetriebes blockiert ist und ein Kraftfahrzeug in einem abgestellten Zustand gegen ein Wegrollen gesichert ist. In einem ausgelegten Zustand ist das Parksperrensystem dazu vorgesehen, das Kraftfahrzeuggetriebe freizugeben. Das Kraftfahrzeuggetriebe weist dazu vorzugsweise ein Parksperrenrad auf. Unter einem "Parksperrenrad" soll dabei ein Zahnrad verstanden werden, das an seinem Umfang eine Verzahnung aufweist, die zur Kopplung mit der Sperrklinke, vorgesehen ist. Vorzugsweise ist die Sperrklinke dazu vorgesehen, in einem eingelegten Zustand des Parksperrensystems, das Parksperrenrad gehäusefest zu setzen. Unter der "Sperrklinke" soll dabei ein zwischen zwei Betriebsstellungen verschwenkbares Element verstanden werden, das zumindest einen Sperrzahn aufweist, der korrespondierend zu der Verzahnung des Parksperrenrads ausgebildet ist und zum Einlegen der Parksperre dazu vorgesehen ist, formschlüssig in die Verzahnung des Parksperrenrads einzugreifen. Vorzugsweise ist die Sperrklinke in einer ersten Betriebsstellung mit dem Parksperrenrad gekoppelt. In dem eingelegten Zustand befindet sich die Sperrklinke in der ersten Betriebsstellung. Vorzugsweise ist die Sperrklinke in einer zweiten Betriebsstellung von dem Parksperrenrad entkoppelt. In dem ausgelegten Zustand befindet sich die Sperrklinke in der zweiten Betriebsstellung.

Die Sperrklinke wird vorzugsweise von dem Betätigungselement betätigt. Unter dem "Betätigungselement" soll insbesondere ein Formschlusselement verstanden werden, das dazu vorgesehen ist, die Sperrklinke zumindest zwischen zwei Betriebsstellungen zu bewegen. Vorzugsweise ist das Betätigungselement als ein konusförmiges Element ausgebildet, das durch eine axiale Verschiebung entlang einer Betätigungsrichtung dazu vorgesehen ist, mittels seiner Konusfläche die Sperrklinke in eine Richtung, die besonders bevorzugt orthogonal zu der Betätigungsrichtung steht, zu verschieben, insbesondere zu verschwenken.

Mit dem Ausdruck "in der Betätigungsrichtung gesehen" ist eine Blickrichtung parallel zu der Drehachse der Sperrklinke und in diejenige Richtung, in der die Schaltstange zum Zwecke eines Einlegens der Sperrklinke bewegt wird, gemeint.

Eine erste Weiterbildung sieht eine zumindest teilweise innerhalb des Parksperrengehäuses angeordnete Druckfeder vor, die koaxial zu der Schaltstange angeordnet ist, derart, dass eine Federkraft der Druckfeder in der Betätigungsrichtung auf die Schaltstange ausgeübt wird, wobei ein der Sperrklinke abgewandtes Ende der Druckfeder, die Platte und die Sperrklinke in der Betätigungsrichtung gesehen in der genannten Reihenfolge nacheinander angeordnet sind. Mit dieser Anordnung lässt sich eine hohe Kompaktheit des Parksperrensystems erreichen.

Besonders vorteilhaft wirkt die Druckfeder direkt auf den Kolben und über den Kolben indirekt auf die Schaltstange.

Vorteilhaft ist der Zylinder der Kolbenzylindereinheit ein Teil einer Zylinderbohrung, wobei innerhalb der Zylinderbohrung sowohl der Kolben, als auch die Schaltstange als auch die Druckfeder angeordnet sind.

Eine Weiterbildung der Erfindung sieht vor, dass innerhalb des ebenen Bereiches zumindest eine Ölübergabestelle angeordnet ist. Auf diese Weise kann vorteilhaft ein in dem Getriebegehäuse angeordneter korrespondierender Ölkanal mit der Ölübergabestelle verbunden werden, in dem der ebene Bereich der Platte mit einem korrespondierenden weiteren ebenen Bereich des Getriebegehäuses zur Anlage gebracht wird.

Eine weitere Weiterbildung der Erfindung sieht vor, dass innerhalb der Platte drei Montagestellen vorgesehen sind, wobei die drei Montagestellen ein Dreieck aufspannen, innerhalb dessen der ebene Bereich zumindest teilweise angeordnet ist. Mit Hilfe der zumindest drei Montagestellen und deren erfindungsgemäßen Anordnung kann die Platte mehrere Funktionen gleichzeitig erfüllen: sie dient zur Halterung der Sperrklinke, dient aber auch als Ölübergabestelle, wobei die drei Montagestellen für eine nötige Flächenpressung sorgen, so dass die Ölübergabestellen in einem an dem Getriebegehäuse verbauten Zustand abgedichtet werden können.

Eine weitere Weiterbildung der Erfindung sieht vor, dass die Sperrklinke eine bestimmte geometrische Form aufweist, nämlich dass die Sperrklinke einen Klinkenzahn, eine Lagerstelle und eine Betätigungsausnehmung aufweist, wobei eine erste Verbindungsgerade durch den die Lagerstelle und die Betätigungsausnehmung und eine zweite Verbindungsgerade durch die Lagerstelle und den Klinkenzahn einen Winkel von zumindest 30° einschließen.

Auf diese Weise lassen sich insgesamt die Schaltstange und die mit dieser wirkverbundene Kolbenzylindereinheit sowie ein Parksperrenrad eines zu sperrenden Kraftfahrzeuggetriebes kompakt anordnen.

Weitere Merkmale und Vorteile ergeben sich aus der folgenden Figurenbeschreibung.

Dabei zeigen:
- Figuren 1 und 2: ein erfindungsgemäßes Parksperrensystem in einer ersten Ansicht,
- Figur 3: das Parksperrensystem in einer zweiten Ansicht,
- Figur 4: das Parksperrensystem in einer dritten Ansicht.

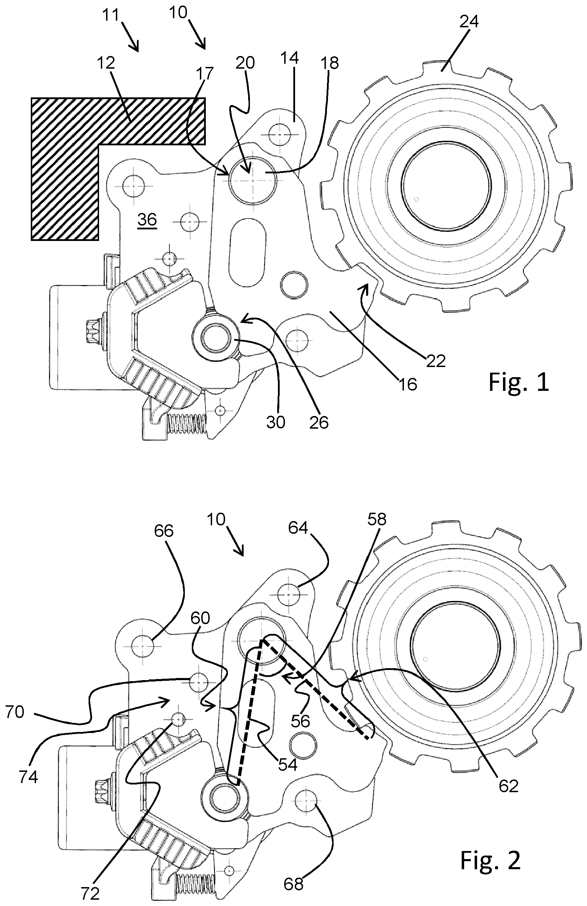

Die erste Ansicht, Figuren 1 und 2 zeigt ein Parksperrensystem 10 mit Blick in einer Betätigungsrichtung 32 von einer Seite, an der eine Sperrklinke 16 an einer Platte 36 eines Parksperrengehäuses 14 angeordnet ist.

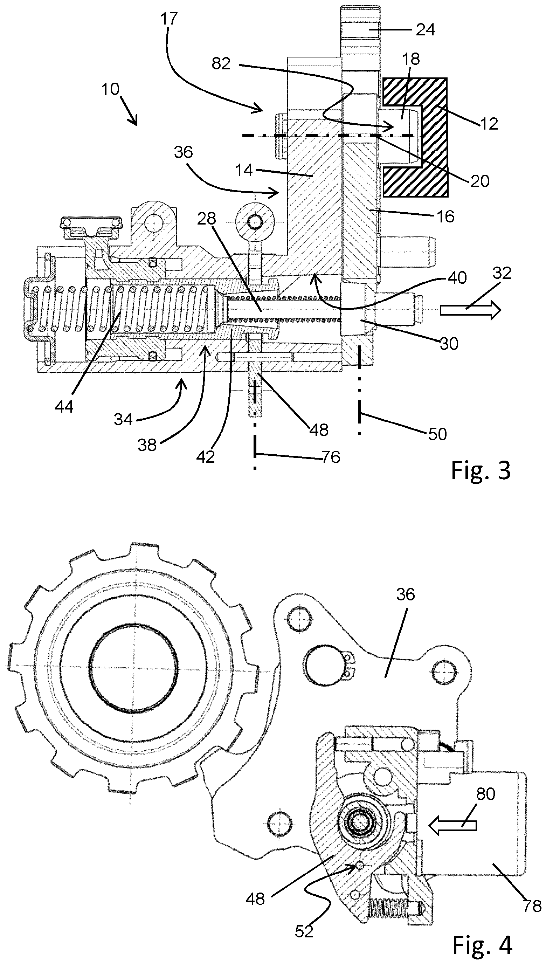

Die zweite Ansicht, Figur 3, zeigt das Parksperrensystem 10 mit Blick senkrecht zu der Betätigungsrichtung 32.

Die dritte Ansicht, Figur, 4 zeigt das Parksperrensystem 10 mit Blick in der Betätigungsrichtung 32 von einer rückwärtigen Seite.

Ds Parksperrengehäuse 14 weist die im Wesentlichen eben ausgeführte Platte 36 und ein mit der Platte fest verbundenes Betätigungsgehäuse 34 auf. Vorteilhaft sind das Betätigungsgehäuse 34 und die Platte 36 einteilig, besonders vorteilhaft als einteiliges Gussteil, ausgeführt.

Das Betätigungsgehäuse 34 weist eine Zylinderbohrung 40 auf, innerhalb welcher ein Kolben 42 angeordnet ist. Die Zylinderbohrung 40 und der Kolben 42 sind jeweils Teil einer hydraulischen Kolbenzylindereinheit 38. Mittels der Kolbenzylindereinheit 38 kann eine ebenfalls innerhalb der Zylinderbohrung 40 angeordnete Schaltstange 28 in der Betätigungsrichtung 32 verschoben werden. Am Ende der Schaltstange 28 ist ein Betätigungselement 30 angeordnet. Das Betätigungselement 30 weist vorzugsweise eine Konusform auf und ist vorzugsweise koaxial zu der Schaltstange 28 angeordnet. Das Betätigungselement 30 wirkt mit einer Betätigungsausnehmung 26 in der Sperrklinke 16 derart zusammen, dass eine Bewegung des Betätigungselementes 30 in der Betätigungsrichtung 32 eine Schwenkbewegung der Sperrklinke 16 in einer ersten Schwenkebene 50 bewirkt.

Ferner ist, größtenteils innerhalb der Zylinderbohrung 40, eine erste Druckfeder 44 koaxial zu dem Kolben 42 angeordnet. Mittels der ersten Druckfeder 44 kann der Kolben 42 und mit ihm auch die Schaltstange 28 in der Betätigungsrichtung 32 bewegt werden.

Das Betätigungselement 30 ist in Richtung einer Drehachse 20 der Sperrklinke 16 gesehen in einem Zustand einer nichtbetätigten Sperrklinke 16 axial zumindest teilweise überlappend zu der Platte 36 beziehungsweise axial zumindest teilweise auf gleicher Höhe wie die Platte 36 angeordnet.

Die Druckfeder 44 weist ein der Sperrklinke 16 abgewandtes Ende und ein der Sperrklinke 16 zugewandtes Ende auf. Das der Sperrklinke 16 abgewandte Ende der Druckfeder 44, die Platte 36 und die Sperrklinke 16 sind in der Betätigungsrichtung 32 gesehen in der genannten Reihenfolge nacheinander angeordnet.

Die Sperrklinke 16 und die Platte 36 sind vorteilhaft im Wesentlichen eben ausgebildet, wodurch sich eine Herstellung vereinfacht, und sie sind vorteilhaft parallel zueinander angeordnet.

Ein Rastenhebel 48 ist verschwenkbar um eine Schwenkachse 52 innerhalb einer zweiten Schwenkebene 76 an dem Betätigungsgehäuse 34 angeordnet. Mittels des Rastenhebels 48 kann der Kolben 42 in einer Stellung, die einer hydraulisch nicht eingelegten Sperrklinke 16 entspricht, fixiert werden. Der Rastenhebel wird mithilfe eines elektromechanischen Aktuator 78 betätigt.

Der Rastenhebel 48, die Platte 36 und die Sperrklinke 16 sind in der Betätigungsrichtung 32 gesehen in der genannten Reihenfolge nacheinander angeordnet.

Der elektromechanische Aktuator 78 ist vorteilhaft an dem Betätigungsgehäuse 34 befestigt. Eine weitere Betätigungsrichtung 80 des elektromechanischen Aktuators 78 ist senkrecht zu der Betätigungsrichtung 32 angeordnet.

Vorteilhaft sind in der Betätigungsrichtung gesehen die erste Druckfeder 44, der Rastenhebel 48 und die Platte in der genannten Reihenfolge an dem Betätigungsgehäuse 34 angeordnet.

Die Sperrklinke 16 ist mittels eines Sperrklinkenbolzen 18 drehbar um die Drehachse 20 an der Platte 36 gelagert. Hierzu weist die Sperrklinke 16 eine Lagerstelle 17 auf. Die Drehachse 20 ist parallel zu der Betätigungsrichtung 32 angeordnet. Der Sperrklinkenbolzen 18 ist vorteilhaft in einer Bohrung in der Platte 36 des Parksperrengehäuses 14 angeordnet.

Besonders vorteilhaft ragt der Sperrklinkenbolzen 18 auf einer der Platte 36 abgewandten Seite der Sperrklinke 16 über die Sperrklinke 16 hinaus, wobei der Sperrklinkenbolzen 18 auf der der Platte 36 abgewandten Seite der Sperrklinke 16 in einer Aufnahme 82 des Getriebegehäuses 12 gelagert ist. Die Aufnahme 82 ist zum Beispiel als ein Sackloch oder als eine Bohrung in dem Getriebegehäuse 12 ausgebildet. In Figur 3 sind das Getriebegehäuse 12 und die Aufnahmen 82 schematisch angedeutet.

Durch die beschriebene beidseitige Lagerung der Sperrklinke 16 beziehungsweise des Sperrklinkenbolzens 18 ergibst sich eine besonders stabile und langlebige Lagerung der Sperrklinke 16.

In Richtung der Drehachse 20 gesehen sind die Platte 36, die Sperrklinke 16 und die Aufnahme 82 in der genannten Reihenfolge nacheinander angeordnet.

Vorteilhaft ist im Bereich um den Sperrklinkenbolzen 18 zwischen der Sperrklinke 16 und der Platte 36 nur ein geringer Spalt. Ebenso ist um den Sperrklinkenbolzen 18 zwischen der Sperrklinke 16 und dem Getriebegehäuse 12 auch nur ein geringer Spalt. Unter einem geringen Spalt wird vorteilhaft ein Spalt von weniger als 5 mm verstanden, besonders vorteilhaft ein Spalt von weniger als 3 mm.

Das Parksperrengehäuse 14 ist mittels einer ersten Montagestelle 64, einer zweiten Montagestelle 66 und einer dritten Montagestelle 68 an einem nur schematisch angedeuteten Getriebegehäuse 12 eines Getriebes 11 eines Kraftfahrzeuges montiert. Von dem Getriebe ist ansonsten nur ein Parksperrenrad 24 dargestellt, welches auf bekannte Weise drehfest mit einer nicht weiter dargestellten Welle des Getriebes 11 verbunden ist.

Zum vorteilhaften Gesamtkonzept des Parksperrensystems 10 trägt auch eine besondere geometrische Form der Sperrklinke 16 bei. Vorteilhaft ist ein Klinkenzahn 22 der Sperrklinke 16, die Lagerstelle 17, die koaxial um die Drehachse 20 angeordnet ist, und die Betätigungsausnehmung 26 sind derart angeordnet, dass eine erste Verbindungsgerade 54 durch die Lagerstelle 17 und die Betätigungsausnehmung 26 und eine zweite Verbindungsgerade 56 durch die Lagerstelle 17 und den Klinkenzahn 22 einen Winkel 58 von zumindest 30° einschließen. Die Sperrklinke 16 hat somit eine in gewissem Sinne dreieckige Form, was an sich eigentlich aufgrund eines erhöhten Gewichts im Vergleich zu bekannten "schlankeren" Sperrklinken ein Nachteil ist, was aber im Gesamtsystem des Parksperrensystems 10 vorteilhaft ist.

Vorteilhaft beträgt ein erster Abstand 60 zwischen der Lagerstelle 17 und der Betätigungsausnehmung 26 80 % bis 120 % eines zweiten Abstands 62 zwischen der Lagerstelle 17 und dem Klinkenzahn 22.

Lagerstelle 17, Betätigungsausnehmung 26 und Klinkenzahn 22 sind somit nahezu in einem gleichschenkligen Dreieck angeordnet. Besonders vorteilhaft sind Lagerstelle 17, Betätigungsausnehmung 26 und Klinkenzahn 22 in einem im Wesentlichen gleichseitigen Dreieck angeordnet.

Zur Befestigung des Parksperrensystems 10 an dem Getriebegehäuse 12 weist das Parksperrengehäuse 14 eine erste Montagestelle 64, eine zweite Montagestelle 66 und eine dritte Montagestelle 68 auf. Die Montagestellen 64, 66, 68 sind im Ausführungsbeispiel als Bohrungen ausgeführt, so dass eine Fixierung mittels nicht dargestellten Schrauben in nicht dargestellten korrespondierenden weiteren Bohrungen im Getriebegehäuse 12 besteht.

Die Montagestellen 64, 66, 68 sind beabstandet voneinander in der Platte 36 angeordnet. Die Platte 36 weist außerdem einen ebenen Bereich 74 auf, in welchem eine erste Ölübergabestelle 70 und eine zweite Ölübergabestelle 72 angeordnet sind. Bei den beiden Ölübergabestellen 70, 72 handelt es sich um Mündungen von Ölkanälen, die in dem Parksperrengehäuse 14 verlaufen und zur Ölversorgung der hydraulischen Kolbenzylindereinheit dienen.

Vorteilhaft sind die Montagestellen 64, 66, 68 in Form eines weiteren Dreieckes angeordnet, wobei die Ölübergabestellen 70, 72 innerhalb des weiteren Dreiecks oder zumindest nahe an dem Dreieck angeordnet sind. Durch die zumindest drei Montagestellen 64, 66, 68 kann eine notwendige Flächenpressung zur Abdichtung der Ölübergabestellen 70, 72 bereitgestellt werden.

### Bezugszeichenliste

- 10: Parksperrensystem
- 11: Getriebe
- 12: Getriebegehäuse
- 14: Parksperrengehäuse
- 16: Sperrklinke
- 17: Lagerstelle
- 18: Sperrklinkenbolzen
- 20: Drehachse
- 22: Klinkenzahn
- 24: Parksperrenrad
- 26: Betätigungsausnehmung
- 28: Schaltstange
- 30: Betätigungselement
- 32: Betätigungsrichtung
- 34: Betätigungsgehäuse
- 36: Platte
- 38: Kolbenzylindereinheit
- 40: Zylinderbohrung
- 42: Kolben
- 44: Erste Druckfeder
- 48: Rastenhebel
- 50: Erste Schwenkebene
- 52: Schwenkachse
- 54: Erste Verbindungsgerade
- 56: Zweite Verbindungsgerade
- 58: Winkel
- 60: Erster Abstand
- 62: Zweiter Abstand
- 64: Erste Montagestelle
- 66: Zweite Montagestelle
- 68: Dritte Montagestelle
- 70: Erste Ölübergabestelle
- 72: Zweite Ölübergabestelle
- 74: Ebener Bereich
- 76: Zweite Schwenkebene
- 78: Elektromechanischer Aktuator
- 80: Weitere Betätigungsrichtung
- 82: Aufnahme

## Patentansprüche

1. Parksperrensystem (10) für ein Kraftfahrzeug, mit einem an einem Getriebegehäuse (12) montierbaren Parksperrengehäuse (14), mit einer an dem Parksperrengehäuse (14) drehbar um eine Drehachse (20) gelagerten Sperrklinke (16), einer an dem Parksperrengehäuse (14) in einer Betätigungsrichtung (32) verschiebbar gelagerten Schaltstange (28), mit einem an der Schaltstange (28) gelagerten Betätigungselement (30),
wobei die Drehachse (20) parallel zu der Betätigungsrichtung (32) angeordnet ist,
wobei das Parksperrengehäuse (14) eine Platte (36) aufweist, wobei ein ebener Bereich (74) der Platte (36) senkrecht zu der Betätigungsrichtung (32) angeordnet ist und wobei in der Platte (36) ein Sperrklinkenbolzen (18) zur Lagerung der Sperrklinke (16) gelagert ist,
wobei in der Betätigungsrichtung (32) gesehen die Sperrklinke (16) hinter der Platte (36) angeordnet ist,
**dadurch gekennzeichnet, dass**
eine hydraulische Kolbenzylindereinheit (38) zur Verschiebung der Schaltstange (28) in der Betätigungsrichtung (32) vorgesehen ist,
wobei das Parksperrengehäuse (14) ein als einteilig und als Gussteil mit der Platte (36) ausgeführtes Betätigungsgehäuse (34) aufweist, wobei das Betätigungsgehäuse (34) eine Zylinderbohrung (40) der hydraulischen Kolbenzylindereinheit (38) aufweist, die koaxial zu der Schaltstange (28) angeordnet ist, wobei innerhalb der Zylinderbohrung (40) ein Kolben (42) der Kolbenzylindereinheit (38) angeordnet ist, wobei ein hinsichtlich der Betätigungsrichtung (32) im Bereich der hydraulischen Kolbenzylindereinheit (38) angeordneter Rastenhebel (48) vorgesehen ist, der verschwenkbar an dem Betätigungsgehäuse (34) gelagert ist, wobei eine Schwenkebene (76) des Rastenhebels (48) senkrecht zu der Drehachse (20) angeordnet ist.

2. Parksperrensystem (10) nach Anspruch 1,
**gekennzeichnet durch**
eine zumindest teilweise innerhalb des Parksperrengehäuses (14) angeordnete Druckfeder (44), die koaxial zu der Schaltstange (28) angeordnet ist, derart, dass eine Federkraft der Druckfeder (44) in der Betätigungsrichtung (32) auf die Schaltstange (28) ausgeübt wird, wobei ein der Sperrklinke (16) abgewandtes Ende der Druckfeder (44), die Platte (36) und die Sperrklinke (16) in der Betätigungsrichtung (32) gesehen in der genannten Reihenfolge nacheinander angeordnet sind.

3. Parksperrensystem (10) nach Anspruch 1 oder 2,
**dadurch gekennzeichnet, dass**
das Betätigungselement (30) in Richtung der Drehachse (20) der Sperrklinke (16) gesehen in einem nicht betätigten Zustand der Sperrklinke (16) axial zumindest teilweise überlappend zu der Platte (36) angeordnet ist.

4. Parksperrensystem (10) nach einem der vorhergehenden Ansprüche, **dadurch gekennzeichnet, dass**
innerhalb der Platte (36) drei Montagestellen (64; 66; 68) vorgesehen sind, wobei die drei Montagestellen (64; 66; 68) ein Dreieck aufspannen, innerhalb dessen der ebene Bereich (74) zumindest teilweise angeordnet ist.

5. Parksperrensystem (10) nach einem der vorhergehenden Ansprüche, **dadurch gekennzeichnet, dass**
in der Betätigungsrichtung (32) gesehen der Rastenhebel (48), die Platte (36) und die Sperrklinke (16) in der genannten Reihenfolge nacheinander angeordnet sind.

6. Parksperrensystem (10) nach einem der vorhergehenden Ansprüche, **dadurch gekennzeichnet, dass**
die Sperrklinke (16) einen Klinkenzahn (22), eine Lagerstelle (17) und eine Betätigungsausnehmung (26) aufweist, wobei eine erste Verbindungsgerade (54) durch die Lagerstelle (17) und die Betätigungsausnehmung (26) und eine zweite Verbindungsgerade (56) durch die Lagerstelle (17) und den Klinkenzahn (22) einen Winkel (58) von zumindest 30° einschließen.

7. Parksperrensystem (10) nach einem der vorhergehenden Ansprüche,
**dadurch gekennzeichnet, dass**
ein erster Abstand (60) zwischen der Lagerstelle (17) und der Betätigungsausnehmung (26) 80 % bis 120 % eines zweiten Abstands (62) zwischen der Lagerstelle (17) und dem Klinkenzahn (22) beträgt.

8. Getriebe (11) mit einem Getriebegehäuse (12), einem Parksperrenrad (24) und einem Parksperrensystem (10) nach einem der vorhergehenden Ansprüche, **dadurch gekennzeichnet, dass**
das Getriebegehäuse (12) eine Aufnahme (82) aufweist, in welcher der Sperrklinkenbolzen (18) gelagert ist, wobei in der Betätigungsrichtung (32) gesehen die Platte (36), die Sperrklinke (16) und die Aufnahme (82) in der genannten Reihenfolge nacheinander angeordnet sind.

9. Getriebe (11) nach Anspruch 8,
**dadurch gekennzeichnet, dass**
innerhalb des ebenen Bereiches (74) zumindest eine Ölübergabestelle (70; 72) angeordnet ist, wobei das Getriebegehäuse (12) einen Ölkanal aufweist und wobei der ebene Bereich (74) derart an dem Getriebegehäuse (12) angeordnet ist, dass der Ölkanal mit der Ölübergabestelle (70; 72) verbunden ist.

## Claims

1. Parking lock system (10) for a motor vehicle, comprising a parking lock housing (14) which is mountable on a transmission housing (12), comprising a pawl (16) mounted on the parking lock housing (14) so as to be rotatable about an axis of rotation (20), a switching rod (28) mounted on the parking lock housing (14) so as to be movable in an actuating direction (32), comprising an actuating element (30) mounted on the switching rod (28),
the axis of rotation (20) being arranged in parallel with the actuating direction (32),
the parking lock housing (14) having a plate (36), a planar region (74) of the plate (36) being arranged perpendicularly to the actuating direction (32), and a pawl pin (18) being mounted in the plate (36) for mounting the pawl (16),
the pawl (16) being arranged behind the plate (36) as seen in the actuating direction (32),
**characterized in that**
a hydraulic piston cylinder unit (38) is provided for moving the switching rod (28) in the actuating direction (32),
the parking lock housing (14) having an actuating housing (34) designed as a single piece and as a cast part with the plate (36), the actuating housing (34) having a cylinder bore (40) of the hydraulic piston cylinder unit (38), which is arranged coaxially with respect to the switching rod (28), a piston (42) of the piston cylinder unit (38) being arranged within the cylinder bore (40), a latching lever (48) arranged in the region of the hydraulic piston cylinder unit (38) with respect to the actuating direction (32) being provided, said latching lever being pivotably mounted on the actuating housing (34), a pivoting plane (76) of the latching lever (48) being arranged perpendicularly to the axis of rotation (20).

2. Parking lock system (10) according to claim 1,
**characterized by**
a compression spring (44) which is arranged at least partially within the parking lock housing (14) and is arranged coaxially with respect to the switching rod (28) in such a way that a spring force of the compression spring (44) is exerted on the switching rod (28) in the actuating direction (32), an end of the compression spring (44) remote from the pawl (16), the plate (36) and the pawl (16) being arranged one after the other in the mentioned order as seen in the actuating direction (32).

3. Parking lock system (10) according to claim 1 or claim 2,
**characterized in that**
the actuating element (30) is arranged so as to be axially at least partially overlapping with respect to the plate (36) in a non-actuated state of the pawl (16) as seen in the direction of the axis of rotation (20) of the pawl (16).

4. Parking lock system (10) according to any of the preceding claims, **characterized in that**
three mounting points (64; 66; 68) are provided within the plate (36), the three mounting points (64; 66; 68) spanning a triangle within which the planar region (74) is at least partially arranged.

5. Parking lock system (10) according to any of the preceding claims, **characterized in that**
the latching lever (48), the plate (36) and the pawl (16) are arranged one after the other in the mentioned order as seen in the actuating direction (32).

6. Parking lock system (10) according to any of the preceding claims, **characterized in that**
the pawl (16) has a pawl tooth (22), a bearing point (17) and an actuating recess (26), a first connecting line (54) through the bearing point (17) and the actuating recess (26) and a second connecting line (56) through the bearing point (17) and the pawl tooth (22) enclosing an angle (58) of at least 30°.

7. Parking lock system (10) according to any of the preceding claims, **characterized in that**
a first distance (60) between the bearing point (17) and the actuating recess (26) is 80% to 120% of a second distance (62) between the bearing point (17) and the pawl tooth (22).

8. Transmission (11) comprising a transmission housing (12), a parking lock gear (24), and a parking lock system (10) according to any of the preceding claims,
**characterized in that**
the transmission housing (12) has a receptacle (82) in which the pawl pin (18) is mounted, the plate (36), the pawl (16) and the receptacle (82) being arranged one after the other in the mentioned order as seen in the actuating direction (32).

9. Transmission (11) according to claim 8,
**characterized in that**
at least one oil transfer point (70; 72) is arranged within the planar region (74), the transmission housing (12) having an oil channel, and the planar region (74) being arranged on the transmission housing (12) such that the oil channel is connected to the oil transfer point (70; 72).

## Revendications

1. Système de verrouillage de stationnement (10) pour un véhicule automobile, comportant un boîtier de verrouillage de stationnement (14) pouvant être monté sur un carter de boîte de vitesses (12), comportant un cliquet (16) logé de manière à pouvoir tourner autour d'un axe de rotation (20) sur le boîtier de verrouillage de stationnement (14), une tige de commutation (28) logée de manière à pouvoir être déplacée dans une direction d'actionnement (32) sur le boîtier de verrouillage de stationnement (14), comportant un élément d'actionnement (30) logé sur la tige de commutation (28),
dans lequel l'axe de rotation (20) est disposé parallèlement à la direction d'actionnement (32),
dans lequel le boîtier de verrouillage de stationnement (14) présente une plaque (36), une zone plane (74) de la plaque (36) étant disposée perpendiculairement à la direction d'actionnement (32) et un boulon (18) de cliquet étant logé dans la plaque (36) afin de loger le cliquet (16),
le cliquet (16), vu dans la direction d'actionnement (32), étant disposé derrière la plaque (36),
**caractérisé en ce**
**qu'**une unité hydraulique à piston-cylindre (38) est prévue pour le déplacement de la tige de commutation (28) dans la direction d'actionnement (32),
le boîtier de verrouillage de stationnement (14) présentant un boîtier d'actionnement (34) conçu en une seule pièce et sous forme de pièce coulée avec la plaque (36), le boîtier d'actionnement (34) présentant un trou cylindrique (40) de l'unité hydraulique à piston-cylindre (38), qui est disposé coaxialement par rapport à la tige de commutation (28), un piston (42) de l'unité à piston-cylindre (38) étant disposé dans le trou cylindrique (40), un levier d'encliquetage (48) disposé, par rapport à la direction d'actionnement (32), dans la zone de l'unité hydraulique à piston-cylindre (38) étant prévu, lequel levier est logé de manière à pouvoir pivoter sur le boîtier d'actionnement (34), un plan de pivotement (76) du levier d'encliquetage (48) étant disposé perpendiculairement par rapport à l'axe de rotation (20).

2. Système de verrouillage de stationnement (10) selon la revendication 1, **caractérisé par**
un ressort de compression (44) disposé au moins partiellement dans le boîtier de verrouillage de stationnement (14), lequel ressort est disposé coaxialement par rapport à la tige de commutation (28) de telle sorte qu'une force de ressort du ressort de compression (44) est exercée dans la direction d'actionnement (32) sur la tige de commutation (28), une extrémité du ressort de compression (44) opposée au cliquet (16), la plaque (36) et le cliquet (16), vus dans la direction d'actionnement (32), étant disposés les uns derrière les autres dans l'ordre mentionné.

3. Système de verrouillage de stationnement (10) selon la revendication 1 ou 2, **caractérisé en ce que**
l'élément d'actionnement (30), vu dans la direction de l'axe de rotation (20) du cliquet (16), dans un état non actionné du cliquet (16), est disposé axialement avec un chevauchement au moins partiel par rapport à la plaque (36).

4. Système de verrouillage de stationnement (10) selon l'une des revendications précédentes,
**caractérisé en ce que**
dans la plaque (36), trois sites de montage (64 ; 66 ; 68) sont prévus, les trois sites de montage (64 ; 66 ; 68) définissant un triangle, dans lequel la zone plane (74) est disposée au moins partiellement.

5. Système de verrouillage de stationnement (10) selon l'une des revendications précédentes,
**caractérisé en ce que**
vu dans la direction d'actionnement (32), le levier d'encliquetage (48), la plaque (36) et le cliquet (16) sont disposés les uns derrière les autres dans l'ordre mentionné.

6. Système de verrouillage de stationnement (10) selon l'une des revendications précédentes,
**caractérisé en ce que**
le cliquet (16) présente une dent de cliquet (22), un point d'appui (17) et un évidement d'actionnement (26), une première droite de jonction (54) à travers le point d'appui (17) et l'évidement d'actionnement (26) et une deuxième droite de jonction (56) à travers le point d'appui (17) et la dent de cliquet (22) formant un angle (58) d'au moins 30°.

7. Système de verrouillage de stationnement (10) selon l'une des revendications précédentes,
**caractérisé en ce**
**qu'**une première distance (60) entre le point d'appui (17) et l'évidement d'actionnement (26) représente 80 % à 120 % d'une deuxième distance (62) entre le point d'appui (17) et la dent de cliquet (22).

8. Boîte de vitesses (11) comportant un carter de boîte de vitesses (12), une roue de verrouillage de stationnement (24) et un système de verrouillage de stationnement (10) selon l'une des revendications précédentes,
**caractérisée en ce que**
le carter de boîte de vitesses (12) présente un logement (82) dans lequel est logé le boulon (18) de cliquet, la plaque (36), le cliquet (16) et le logement (82), vus dans la direction d'actionnement (32), étant disposés les uns derrière les autres dans l'ordre mentionné.

9. Boîte de vitesses (11) selon la revendication 8,
**caractérisée en ce que**
au moins un point de transfert d'huile (70 ; 72) est disposé dans la zone plane (74), le carter de boîte de vitesses (12) présentant un canal à huile et la zone plate (74) étant disposée au niveau du carter de boîte de vitesses (12) de telle sorte que le canal à huile est relié au point de transfert d'huile (70 ; 72).
